# FASCICULE DE BREVET EUROPEEN

(11) **EP 2 045 893 B1**
(45) Date de publication et mention de la délivrance du brevet: **11.09.2013**
(21) Numéro de dépôt: 08165336.2
(22) Date de dépôt: 29.09.2008
(51) Int. Cl.: H02G 5/06

(54) **Installation d'appareillages sous enveloppe métallique comportant deux demi-entretoises de démontage**
Metallgekapselte Schaltanlage mit zwei zur Demontage vorgesehen Distanzringe
Metal enclosed switchgear comprising two half-spacer rings for disassembly

(30) Priorité: 02.10.2007 FR 0706891
(43) Date de publication de la demande: 08.04.2009
(73) Titulaire: ALSTOM Technology Ltd, 5400 Baden (CH)
(72) Inventeur: Gelloz, Bernard, 73100 Saint Offenge Dessous (FR); Rech, Christophe, 73100 Gresy sur Aix (FR)
(74) Mandataire: Ilgart, Jean-Christophe

(56) Documents cités:
- JP-A- 10 313 525
- US-A- 5 142 440

## Description

### DOMAINE TECHNIQUE

L'invention concerne un procédé de démontage d'un élément faisant partie d'une installation d'appareillages électriques sous enveloppe métallique, ladite installation comportant plusieurs tronçons ayant un axe longitudinal.

Elle concerne également une installation d'appareillages sous enveloppe métallique comportant plusieurs tronçons ayant un axe longitudinal parmi lesquels un tronçon à ôter et un tronçon adjacent, chacun de ces tronçons comportant une bride, une barre démontable étant disposée axialement dans lesdits tronçons, l'installation comportant des moyens de démontage du tronçon à ôter.

Dans ce type de matériel, des enveloppes métalliques blindées et les conducteurs sont juxtaposés les uns aux autres de manière continue pour assurer le passage du courant principal dans les conducteurs et les courants de retour dans l'enveloppe métallique.

La maintenance nécessite de pouvoir démonter dans certains cas des éléments constitutifs d'un poste blindé (disjoncteur, sectionneur de barre, viroles) sans avoir à démonter l'intégralité du poste.

On connaît déjà (JP 10 31 3525 A) des installations de type. Elles comportent un soufflet de démontage. On connaît également (JP 11 06 9580A) une installation comportant une virole télescopique de démontage. Cependant, le soufflet de démontage est un ensemble complexe nécessitant de nombreux réglages et ajustements par des tiges filetées. Sa réalisation est spécifique et coûteuse.

La virole télescopique peut présenter un risque accru de défaut d'étanchéité du fait du grand nombre de joints et de pièces utilisés. Cette solution présente donc un coût élevé.

La présente invention a pour objet une installation et un procédé de démontage qui remédient à ces inconvénients en proposant un élément démontable simple. Ces buts sont atteints par le fait que les moyens de démontage du tronçon à ôter sont constitués par une première et une seconde demi entretoises, chacune de ces entretoises comportant une surface droite et une surface inclinée, les surfaces droites étant raccordées aux brides de tronçon à ôter et du tronçon adjacent, les surfaces inclinées se faisant face et étant complémentaires de manière que les surfaces droites soient parallèles.

Selon le procédé de démontage, l'installation comportant une première et une seconde entretoises intercalées entre une bride d'un tronçon à ôter et une bride d'un tronçon adjacent, la première et la seconde entretoises comportant une surface droite et une surface inclinée, les surfaces inclinées se faisant face et étant complémentaires de manière que les surfaces droites soient parallèles, on réalise les étapes successivement suivantes :
- on dévisse des moyens de fixation, tels que des boulons, par lesquels les demi entretoises sont fixées à la bride du tronçon à ôter et la bride du tronçon adjacent ;
- on fait glisser la première bride suivant une direction perpendiculaire à l'axe longitudinal des tronçons jusqu'à ce qu'elles viennent en contact avec une barre démontable disposée axialement dans les tronçons ;
- on fait glisser la seconde entretoise suivant une direction perpendiculaire à l'axe longitudinal des tronçons opposée à la direction de glissement de la première entretoise ;
- on dévisse la barre démontable au moyen d'une clef introduite dans l'espace dégagé par le glissement de la première et de la seconde entretoise.

Enfin, l'invention concerne une demi entretoise faisant partie d'une installation selon la présente invention.

Cette installation et ce procédé présentent de nombreux avantages :
- le coût est moins élevé ;
- le système de montage et de démontage est simple. Il comporte peu de pièces ;
- bonne étanchéité ;
- grande facilité de montage et de démontage ;
- pas de réglage nécessaire.

D'autres caractéristiques et avantages de l'invention apparaîtront encore à la lecture de la description qui suit d'un exemple de réalisation donné à titre purement illustratif en référence aux figures annexées. Sur ces figures :
- les figures 1 à 4 sont des vues en perspectives qui illustrent un procédé de l'art antérieur ;
- la figure 5 est une vue d'une installation conforme à la présente invention ;
- la figure 6 est une vue similaire à la figure 3, l'une des demi entretoises ayant été glissée ;
- les figures 7 et 8 représentent deux vues latérales d'une installation conforme à la présente invention.

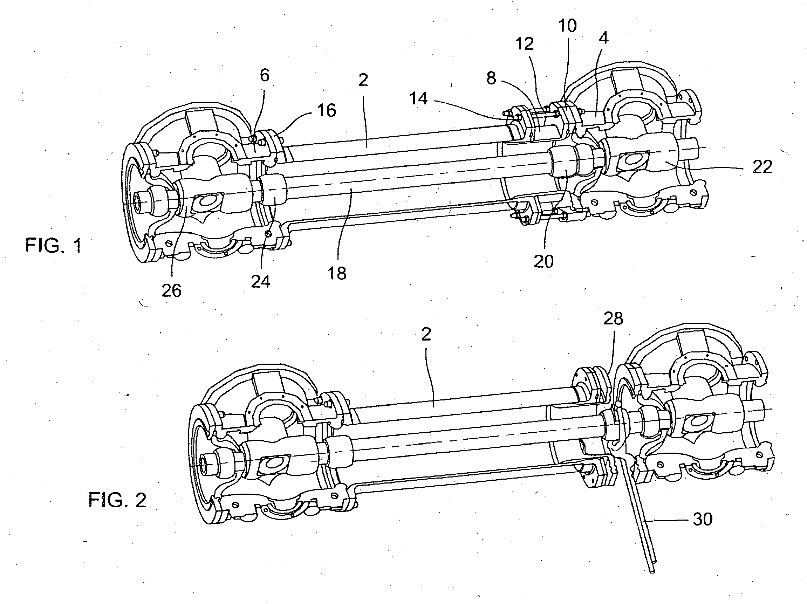

On a représenté sur la figure 1 une installation d'appareillages sous enveloppe métallique comportant plusieurs tronçons ayant un axe longitudinal. Ces tronçons sont respectivement un tronçon à ôter 2, un premier tronçon adjacent 4 et un second tronçon adjacent 6. Afin de permettre le démontage du tronçon à ôter 2, celui-ci comporte une virole télescopique 8. Cette virole télescopique est maintenue contre une bride 10 du premier tronçon adjacent 4 par le moyen de vis 12 prenant appui sur une virole 14 du tronçon à ôter 2. A son autre extrémité, le tronçon à ôter 2 est raccordé au second tronçon adjacent 6 par une bride 16. Une barre conductrice 18 est disposée axialement à l'intérieur du tronçon à ôter 2. A une première extrémité la barre conductrice 18 est raccordée par un écrou 20 à un appareillage électrique 22 logé dans le premier tronçon adjacent 4 et son autre extrémité elle est raccordée par un écrou 24 à un second appareillage électrique 26 situé dans le second tronçon adjacent.

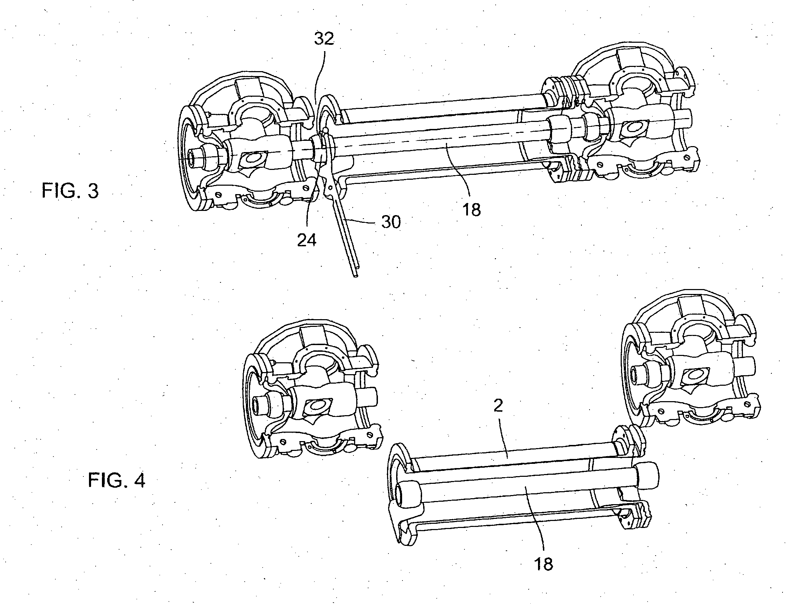

Sur la figure 2 les vis 12 ont été ôtées et la virole télescopique 8 a été coulissée à l'intérieur du tronçon à ôter 2. De ce fait, la virole télescopique dégage un espace 28 par lequel il est possible d'introduire une clef 30 permettant de desserrer l'écrou 20. Lorsque cette opération a été effectuée, le tronçon à ôter est poussé vers la droite (selon la figure) de manière que la bride de virole télescopique vienne au contact de la bride 10 du premier tronçon adjacent 4, ce qui dégage un espace 32 à la gauche du tronçon à ôter 2. Par cet espace on introduit la clef 30 de manière à démonter le second écrou 24. La barre conductrice est alors entièrement libre est il possible de retirer le tronçon à ôter 2 accompagné de la barre conductrice 18 comme représenté sur la figure 4.

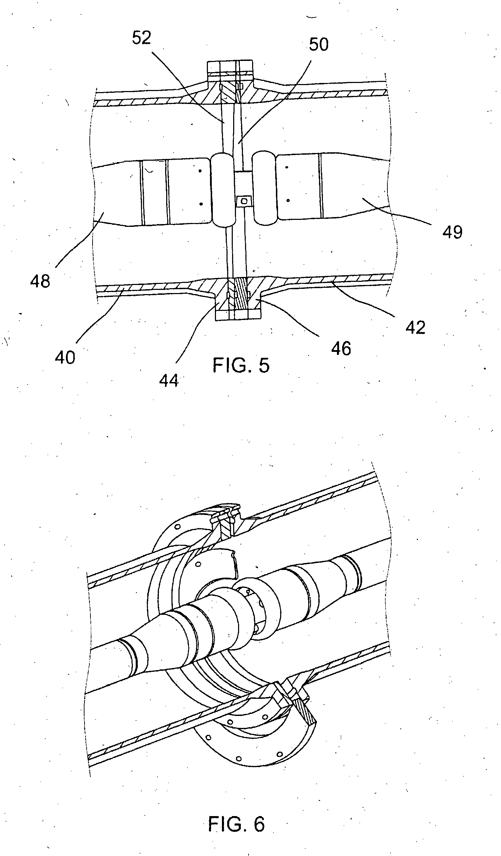

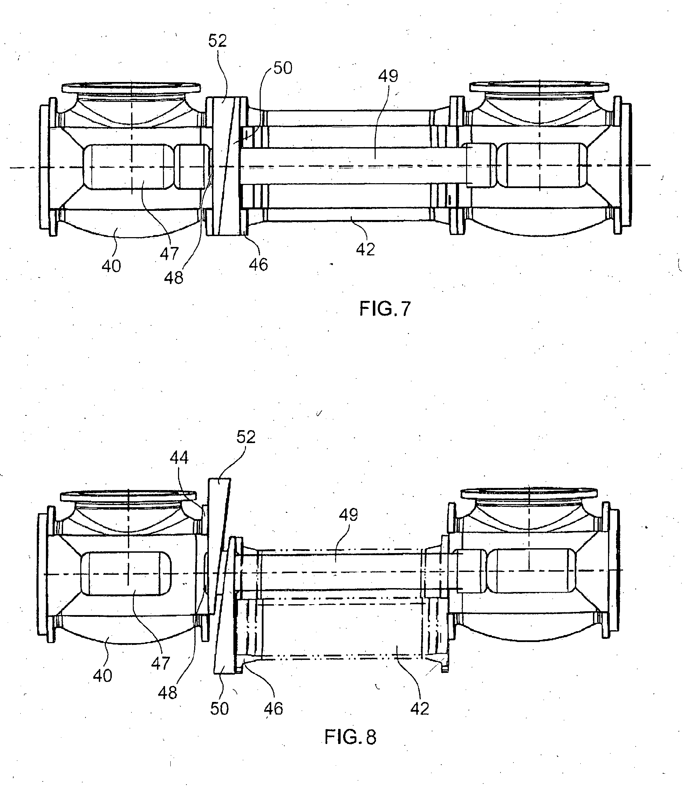

On a représenté sur la figure 5 une vue d'une installation conforme à la présente invention. Elle comporte une virole à ôter 42 et une virole adjacente 40. La virole à ôter comporte une bride 46 et la virole adjacente comporte une bride 44. Deux barres conductrices 47 et 49 reliées par un écrou 48 sont disposées selon l'axe longitudinal des tronçons 40 et 42. Entre les brides 44 et 46 sont disposées deux demi entretoises 50 et 52. L'entretoise 50 s'applique contre la bride 46 du tronçon adjacent 42 et la demi entretoise 52 s'applique contre la bride 44 du tronçon à ôter 40. Sur leurs faces opposées, les demi entretoises 50 et 52 sont taillées en biseau d'un angle égal afin que leur face droite située au contact des brides 44 et 46 soit parallèles. Les demi entretoises 50 et 52 sont ainsi complémentaires. Afin de créer un espace nécessaire pour l'introduction d'une clef, on commence par démonter les vis (non représentées) qui maintiennent les brides 44 et 46 ainsi que les demi entretoises 50 et 52 serrées. Cette opération ayant été effectuée il est possible de retirer l'une des demi entretoises, par exemple la demi entretoise 50 en la faisant glisser le long de la bride 46 comme représenté sur la figure 7. Puis on fait glisser de la même manière la seconde demi entretoise 52 en sens opposé le long de la bride 44 comme représenté sur les figures 7 et 8. On libère ainsi un espace permettant d'introduire une clef qui permet, de manière classique,de dévisser l'écrou 48 et de désolidariser la barre conductrice 47 de la barre conductrice 49. Ensuite, comme on l'a expliqué en référence à l'art antérieur, on pousse le tronçon à ôter vers la gauche (selon la figure 8) de manière à dégager sur la droite de ce tronçon à ôter 42 un espace libre permettant de dévisser l'écrou 50 de l'autre extrémité de la barre conductrice 49 ce qui permet de retirer complètement le tronçon à ôter 42 accompagné de la barre conductrice 49.

## Revendications

1. Procédé de démontage d'un élément faisant partie d'une installation d'appareillages électriques sous enveloppe métallique, ladite installation comportant plusieurs tronçons (40, 42) ayant un axe longitudinal, une première et une seconde entretoises (50, 52) étant intercalées entre une bride d'un tronçon à ôter (44) et une bride (46) d'un tronçon adjacent (42), la première et la seconde entretoises (50, 52) comportant une surface droite et une surface inclinée, les surfaces inclinées se faisant face et étant complémentaires de manière que les surfaces droites soient parallèles, comportant les étapes suivantes :
- on dévisse des moyens de fixation, tel que des boulons, par lesquels les demi entretoises (50, 52) sont fixées à la bride (46) du tronçon à ôter et la bride (46) du tronçon adjacent (44) ;
- on fait glisser la première bride (50) suivant une direction perpendiculaire à l'axe longitudinal des tronçons (40, 42) jusqu'à ce qu'elle vienne en contact avec une barre démontable (48) disposée axialement dans les tronçons (40, 42) ;
- on fait glisser la seconde entretoise (52) suivant une direction perpendiculaire à l'axe longitudinal des tronçons opposés à la direction de glissement de la première entretoise ;
- on dévisse la barre démontable (48) au moyen d'une clef introduite dans l'espace dégagé par le glissement de la première et de la seconde entretoise (50, 52).

2. Installation d'appareillages sous enveloppe métallique comportant plusieurs tronçons (40, 42) ayant un axe longitudinal, parmi lesquels un tronçon à ôter (40) et un tronçon adjacent (42), chacun de ces tronçons comportant une bride (44, 46), une barre démontable (48) étant disposée axialement dans lesdits tronçons (40, 42); l'installation comportant des moyens de démontage du tronçon à ôter (40), **caractérisé en ce que** ces moyens de démontage soient constitués par une première et une seconde demi entretoise (50, 52), chacune de ces entretoises comportant une surface droite et une surface inclinée, les surfaces droites étant raccordées aux brides du tronçon à ôter et du tronçon adjacent (44, 46), les surfaces inclinées se faisant face et étant complémentaires de manière à ce que les surfaces droites soient parallèles.

3. Demi entretoise faisant partie d'une installation selon la revendication 2, **caractérisée en ce qu'**elle comporte une surface droite et une surface inclinée, les surfaces droites étant raccordées aux brides d'un tronçon à ôter et d'un tronçon adjacent, les surfaces inclinées se faisant face et étant complémentaires de manière à ce que les surfaces droites soient parallèles.

## Patentansprüche

1. Verfahren zum Abmontieren eines Teils, das zu einer metallgekapselten, elektrischen Schaltanlage gehört, wobei die Anlage mehrere Abschnitte (40, 42) mit einer Längsachse enthält, wobei ein erster und ein zweiter Steg (50, 52) zwischen einem Flansch eines zu entfernenden Abschnitts (44) und einem Flansch (46) eines angrenzenden Abschnitts (42) eingesetzt sind, wobei der erste und der zweite Steg (50, 52) eine gerade Fläche und eine geneigte Fläche aufweisen, wobei die geneigten Flächen einander gegenüberliegen und komplementär ausgeführt sind, so dass die geraden Flächen parallel verlaufen, welches Verfahren die nachfolgenden Schritte umfasst:
- Abschrauben der Befestigungsmittel, wie etwa Schraubbolzen, über welche die Steghälften (50, 52) am Flansch (46) des zu entfernenden Abschnitts und am Flansch (46) des angrenzenden Abschnitts (44) befestigt sind;
- Verschieben des ersten Flansches (50) in einer Richtung senkrecht zur Längsachse der Abschnitte (40, 42), bis er mit einem abmontierbaren Stab (48) in Kontakt gelangt, der axial in den Abschnitten (40, 42) angeordnet ist;
- Verschieben des zweiten Flansches (52) in einer Richtung senkrecht zur Längsachse der Abschnitte, die der Verschieberichtung des ersten Stegs entgegengesetzt ist;
- Abschrauben des abmontierbaren Stabs (48) mittels eines Schlüssels, der in den durch Verschieben des ersten und des zweiten Stegs (50, 52) freigegebenen Freiraum eingeführt wird.

2. Metallgekapselte Schaltanlage, enthaltend mehrere Abschnitte (40, 42) mit einer Längsachse, darunter ein zu entfernender Abschnitt (40) und ein angrenzender Abschnitt (42), wobei jeder dieser Abschnitte einen Flansch (44, 46) aufweist, wobei ein abmontierbarer Stab (48) axial in den Abschnitten (40, 42) angeordnet ist, wobei die Anlage Mittel zum Abmontieren des zu entfernenden Abschnitts (40) aufweist, **dadurch gekennzeichnet, dass** diese Abmontiermittel aus einer ersten und einer zweiten Steghälfte (50, 52) bestehen, wobei jeder dieser Stege eine gerade Fläche und eine geneigte Fläche aufweist, wobei die geraden Flächen mit den Flanschen des zu entfernenden Abschnitts und des angrenzenden Abschnitts (44, 46) verbunden sind, wobei die geneigten Flächen einander gegenüberliegen und komplementär ausgeführt sind, so dass die geraden Flächen parallel verlaufen.

3. Steghälfte, die zu einer Anlage nach Anspruch 2 gehört, **dadurch gekennzeichnet, dass** sie eine gerade Fläche und eine geneigte Fläche aufweist, wobei die geraden Flächen mit den Flanschen eines zu entfernenden Abschnitts und eines angrenzenden Abschnitts verbunden sind, wobei die geneigten Flächen einander gegenüberliegen und komplementär ausgeführt sind, so dass die geraden Flächen parallel verlaufen.

## Claims

1. A method of dismantling an element that forms part of an installation of electrical devices within a metal envelope, the said installation comprising a plurality of sections (40, 42) having a longitudinal axis, with a first spacer element (50) and a second spacer element (52) being interposed between a flange (44) of a section (40) that is to be removed and a flange (46) of an adjacent section (42), the first and second spacer elements (50, 52) having a transverse surface and an inclined surface, the inclined surfaces being arranged facing each other and being complementary in such a way that the transverse surfaces are parallel to each other, the method comprising the following steps:
· unscrewing fastening means such as screws, by which the half-spacers (50, 52) are fixed to the flange (44) of the section that is to be removed and the flange (46) of the adjacent section (42);
· sliding the first spacer element (50) in a direction at right angles to the longitudinal axis of the said sections (40, 42), until it comes into contact against a detachable bar (48) which is disposed axially within the said sections (40, 42);
· sliding the second spacer element (52) in a direction, at right angles to the longitudinal axis of the said sections, which is the opposite direction to that in which the first spacer element was slid; and
· unscrewing the detachable bar (48) by means of a wrench which is introduced into a space revealed by the sliding movement of the first and second spacer elements (50, 52).

2. An installation of devices within a metal envelope, comprising a plurality of sections (40, 42) having a longitudinal axis, including a section (40) that is to be removed and an adjacent section (42), each of the said sections having a flange (44, 46), with a detachable bar (48) being disposed axially within the said sections (40, 42), the installation including dismantling means for detachment of the section (40) that is to be removed, **characterized in that** the said dismantling means consist of a first half-spacer (50) and a second half-spacer (52), each of the said half-spacers having a transverse surface and an inclined surface, the transverse surfaces being engaged with the flanges of the said section to be removed and of the adjacent section (44, 46) respectively, the inclined surfaces being disposed facing each other and being complementary in such a way that the transverse surfaces are parallel to each other.

3. A half-spacer constituting part of an installation according to claim 2, **characterized in that** it comprises a transverse surface and an inclined surface, said transverse surfaces being engaged with the flanges of a section to be removed and of an adjacent section, said inclined surfaces being disposed facing each other and being complementary in such a way that the transverse surfaces are parallel to each other.
